# EUROPÄISCHE PATENTSCHRIFT

(11) **EP 3 561 455 B1**
(45) Veröffentlichungstag und Bekanntmachung des Hinweises auf die Patenterteilung: **13.01.2021**
(21) Anmeldenummer: 19166659.3
(22) Anmeldetag: 01.04.2019
(51) Int. Cl.: G01D 4/00, H04L 29/06, H04L 29/08, H04Q 9/00

(54) **VERFAHREN ZUM BETRIEB EINES VERBRAUCHSDATENERFASSUNGSSYSTEMS**
METHOD FOR OPERATING A UTILITY METER DATA COLLECTION SYSTEM
PROCÉDÉ DE FONCTIONNEMENT D'UN SYSTÈME DE SAISIE DE DONNÉES DES COMPTEURS

(30) Priorität: 28.04.2018 DE 102018003511
(43) Veröffentlichungstag der Anmeldung: 30.10.2019
(73) Patentinhaber: Diehl Metering Systems GmbH, 90451 Nürnberg (DE)
(72) Erfinder: Joppich-Dohlus, Petra, 91080 Rathsberg (DE); Blank, Thomas, 91732 Merkendorf (DE); Schmitz, Stefan, 90455 Nürnberg (DE); Schmidt, Achim, 91367 Weißenohe (DE)
(74) Vertreter: Diehl Patentabteilung

(56) Entgegenhaltungen:
- US-A1- 2013 275 736
- ANOYNOUS: "NEN-EN 13757-7:2016 Ontw. en - Communication systems for meters - Part 7: Transport and security service", NEDERLANDSE NORM, KONINKLIJK NEDERLANDS NORMALISATIE INSTITUUT, NL , Bd. NEN-EN 13757-7:2016 1. Januar 2016 (2016-01-01), Seiten 1-91, XP009509483, Gefunden im Internet: URL:https://www.nen.nl/NEN-Shop/Norm/NENEN -1375772016-Ontw.-en.htm
- Anonymous: "Open Metering System Specification Volume 2 Primary Communication Issue 4.1.2 / 2016-12-16 RELEASE", , 16. Dezember 2016 (2016-12-16), XP055612370, Gefunden im Internet: URL:https://oms-group.org/fileadmin/files/ download4all/specification/Vol2/4.1.2/OMS- Spec_Vol2_Primary_v412.pdf [gefunden am 2019-08-12]

## Beschreibung

Die vorliegende Erfindung betrifft ein Verfahren zum Betrieb eines Datenerfassungssystems gemäß dem Oberbegriff des Anspruchs 1.

### Technologischer Hintergrund

Die Datenübertragung von Messeinheiten, wie z. B. Sensoren, Verbrauchsmessern bzw. Verbrauchszählern oder Komponenten von Smart-Home-Steuerungen, gewinnt im täglichen Gebrauch zunehmend an Bedeutung. Ein wichtiger Anwendungsbereich von Messeinheiten ist der Einsatz von intelligenten Verbrauchsdatenerfassungsgeräten, sogenannten Smart Metern. Diese sind in der Regel in ein Versorgungsnetz eingebundene Verbrauchszähler, z. B. für Energie, Strom, Gas oder Wasser, die dem jeweiligen Anschlussbenutzer den tatsächlichen Verbrauch anzeigen und ein Kommunikationsnetz zur Übertragung der Verbrauchsdaten an den Versorger nutzen. Intelligente Verbrauchszähler haben den Vorteil, dass manuelle Ablesungen der Zählerstände entfallen und seitens des Versorgers kurzfristigere Rechnungstellungen gemäß dem tatsächlichen Verbrauch vorgenommen werden können.

Zur Erfassung der Verbrauchsdaten werden zunehmend intelligente Messinfrastrukturen eingesetzt. In diesen Messinfrastrukturen (Verbrauchsdatenerfassungssysteme) stellen die Verbrauchszähler die Endgeräte dar, durch die an den Verbrauchsstellen Messdaten aufgenommen werden. Die Messdaten werden digital von den Verbrauchszählern an ein übergeordnetes Managementsystem bzw. Head-End-System übertragen. Das Head-End-System verwaltet die Verbrauchsdaten und kommuniziert mit den Verbrauchszählern. Eine intelligente Messinfrastruktur kann dabei eine große Anzahl an Verbrauchszählern umfassen. Daher ist eine simultane direkte Kommunikationsverbindung von allen Verbrauchszählern zum Head-End-System oft nicht möglich, da nicht ausreichend Kommunikationsmittel zur Verfügung stehen bzw. die Übertragungsbandbreiten zu gering sind. Damit die von den Verbrauchszählern erfassten und versendeten Daten dennoch möglichst sicher und verlustfrei an das Head-End-System übertragen werden können, werden Datensammelvorrichtungen, sogenannte Datensammler, eingesetzt. Die Datensammler werden in der Kommunikationsstrecke zwischen den Verbrauchszählern und dem Head-End-System angeordnet. Dabei sammeln sie auf einem Kommunikationsweg die von den Verbrauchszählern versendeten Verbrauchsdaten und agieren als Zwischenspeicher bis die von ihnen gespeicherten Verbrauchsdaten durch das Head-End-System abgerufen werden. Ferner können die Datensammler zusätzliche Aufgaben übernehmen, wie beispielsweise Statusabfragen bei den Verbrauchszählern durchführen sowie diesen Informationen und Programmcodes, wie beispielsweise Firmware- und Software-Updates sowie Kommunikationszeitpläne, bereitzustellen.

Kommunikationswege zwischen Datensammlern und Verbrauchszählern werden regelmäßig als Primärkommunikation bezeichnet, wohingegen Kommunikationswege zwischen Datensammlern und dem Head-End-System als Tertiärkommunikation bezeichnet werden. Ferner bezeichnet man als Sekundärkommunikation die Kommunikation zwischen benachbarten Datensammlern über spezielle Schnittstellen, welche für gewöhnlich jedoch eine zusätzliche Funkschnittstelle benötigen.

Für die Primärkommunikation von einem Verbrauchszähler zu einem Datensammler werden für gewöhnlich andere Übertragungswege verwendet, als für die Tertiärkommunikation von einem Datensammler zum Head-End-System, da unterschiedliche Anforderungen beispielsweise an die Übertragungsbandbreite, den Energieverbrauch, die Übertragungsqualität, die Reichweite sowie die Redundanz der Systeme gestellt werden.

Um eine sichere und fehlerfreie Kommunikation vom Head-End-System zum einzelnen Verbrauchszähler zu gewährleisten, werden für gewöhnlich die Kommandos im Head-End-System berechnet und geschützt. Das Head-End-System generiert ein Kommando oder eine Kommando-Sequenz, welche vom Head-End-System über den Datensammler an einen Verbrauchszähler gesendet wird. Dieses Kommando bzw. diese Kommando-Sequenz wird hierfür vom Head-End-System verschlüsselt oder gesichert. Anschließend wird aus dem verschlüsselten oder gesicherten Kommando bzw. Kommando-Sequenz vom Head-End-System der verschlüsselte bzw. gesicherte Teil einer Nachricht oder eine vollständige verschlüsselte bzw. gesicherte Nachricht erstellt. Zum Schutz werden Sicherheitsparameter berechnet, wie z. B. Verschlüsselungen oder Nachrichtenauthentifizierungscodes, sogenannte MAC (Message Authentication Code). In deren Berechnungen kann eine Zeit-variable Größe, wie z. B. der sogenannte Nachrichtenzähler MC (Message Counter) einfließen. Dadurch kann beispielsweise Replay-Angriffen im Kommunikationsprotokoll vorgebeugt werden.

Die nötigen Schlüssel zur Berechnung der Sicherheitsparameter sind üblicherweise im Head-End-System hinterlegt, jedoch nicht im Datensammler. Eine Nachricht bzw. der Teil einer Nachricht, für welchen ein Schlüssel benötigt wird, wird demnach im Head-End-System unter Einbeziehung der Sicherheitsparameter berechnet und vom Datensammler an den entsprechenden Verbrauchszähler weitergeleitet. Da im Datensammler die nötigen Schlüssel nicht hinterlegt sind, muss dieser bei einem Übertragungsfehler oder einem anderen sicherheitstechnischen Fehler zwischen Datensammler und Verbrauchszähler eine neue Nachricht beim Head-End-System anfordern.

### Nächstliegender Stand der Technik

In der US 2013/0275736 A1 wird eine Verbrauchszähler-Infrastruktur beschrieben, bestehend aus einem Head-End, Datensammler und Verbrauchszähler, wobei der Datensammler Daten von jedem Verbrauchszähler empfängt, speichert und periodisch an eine zentrale Stelle sendet.

In der Norm EN 13757, insbesondere in der Norm NEN-EN 13757-7:2016, Communication systems for meters - Part 7:Transport and security service, wird ein Nachrichtenzähler beschrieben, der bei Übertragungen von Nachrichten Verwendung findet. Der Nachrichtenzähler dient der Sicherheit, wie z. B. dem Schutz vor Replay-Angriffen. Wenn ein Verbrauchszähler in einem Verbrauchsdatenerfassungssystem eine Nachricht von einem Kommunikationspartner empfängt, prüft dieser den Wert des Nachrichtenzählers. Sofern sich der Wert des Nachrichtenzählers nicht innerhalb eines bestimmten festgelegten Bereichs befindet, wird die Nachricht als ungültig verworfen. Andernfalls wird der Wert des Nachrichtenzählers gespeichert und für anschließende Entschlüsselungen oder Authentifizierungsprüfungen abhängig vom verwendeten Sicherheitsmechanismus verwendet. Somit kann jedoch eine Nachricht seine Gültigkeit nicht über den festgelegten Bereich hinaus behalten. Ferner hat der Absender der Nachricht keinen Einfluss auf den akzeptierten Gültigkeitsbereich des Empfängers und unterliegt damit einer nicht selbst beinflussbaren zeitlichen Beschränkung.

In der Open Metering System Specification, Volume 2, Primary Communication, Issue 4.1.2 / 2016-12-16, Release (gefunden im Internet, https://oms-group.org/ fileadmin/files/download4all/specification/Vol2/4.1.2/OMS-Spec_Vol2_Primary_v412.pdf) wird die bidirektionale Kommunikation zwischen einem OMS-Gerät, z. B. einem Smart Meter, und einem Kommunikationsgerät (Gateway) beschrieben. In Volume 2 wird die Kommunikation zwischen einem Zähler bzw. Aktor und dem Gateway beschrieben. Unter Kommunikationssicherheit wird insbesondere die Verwendung eines Nachrichtenzählers erläutert.

### Aufgabe der vorliegenden Erfindung

Die Aufgabe der vorliegenden Erfindung besteht darin, ein neuartiges Verfahren zum Betrieb eines Datenerfassungssystems zur Verfügung zu stellen, bei dem bei einer effizienten Nutzung der Netzwerkbandbreite eine erhöhte zeitliche Flexibilität bei der Zustellung von Kommandos ermöglicht wird.

### Lösung der Aufgabe

Die vorstehende Aufgabe wird durch die gesamte Lehre des Anspruchs 1 gelöst. Zweckmäßige Ausgestaltungen der Erfindung sind in den Unteransprüchen beansprucht.

Erfindungsgemäß ist ein Verfahren zum Betrieb eines Datenerfassungssystems, vorzugsweise Verbrauchsdatenerfassungssystem, vorgesehen, mit einer zentralen Stelle, insbesondere einem Head-End-System, einer Zwischenstelle, insbesondere einem Datensammler, sowie einer Endstelle, insbesondere einem Verbrauchszähler, wobei die zentrale Stelle und die Zwischenstelle einen tertiären bidirektionalen Kommunikationsweg festlegen, wobei die Zwischenstelle und die Endstelle einen primären bidirektionalen Kommunikationsweg per Funk festlegen, wobei in der zentralen Stelle aus einem Kommando ein zeitlich begrenzt gültiger Nachrichtenteil unter Verwendung von Parametern erstellt wird, wobei zur Datenübertragung der Nachrichtenteil von der zentralen Stelle in einer Nachricht an die Zwischenstelle gesendet wird, und wobei der Nachrichtenteil von der Zwischenstelle weiter an die Endstelle gesendet wird, sofern der Nachrichtenteil noch gültig ist, wobei in der zentralen Stelle aus einem Kommando eine Mehrzahl an zeitlich unterschiedlich begrenzt gültigen Nachrichtenteilen erzeugt wird, wobei kennzeichnenderweise die Mehrzahl an zeitlich begrenzt gültigen Nachrichtenteilen von der zentralen Stelle in einer Nachricht an die Zwischenstelle gesendet wird, die Gültigkeit der Nachrichtenteile in der Zwischenstelle überprüft wird, und sofern ein Nachrichtenteil zum Senden von der Zwischenstelle an die Endstelle noch gültig ist, der betreffende Nachrichtenteil innerhalb einer Nachricht von der Zwischenstelle an die Endstelle gesendet wird.

Vorteilhafterweise kann somit die zeitliche Beschränkung eines einzelnen Nachrichtenteils in einfacher Weise umgangen werden und der Nachrichtenteil der Endstelle bzw. dem Verbrauchszähler für einen längeren Gültigkeitsbereich zur Verfügung gestellt werden. Es können mehrere Nachrichtenteile mit unterschiedlichen zeitlichen Gültigkeitsbereichen verwendet werden. Der Datensammler kann dadurch mit höherer Wahrscheinlichkeit ein Kommando innerhalb einer gültigen Nachricht bzw. Nachrichtenteil an den Verbrauchszähler zustellen. Die Neuberechnung des Nachrichtenteils auf Basis des Kommandos im Head-End-System kann damit in einem größeren Teil der Fälle vermieden werden. Somit wird die Prozesskette der Kommando-Zustellung vereinfacht und beschleunigt. Die ungültig gewordenen Nachrichtenteile können verworfen werden. Ebenso können nach erfolgter Zustellung einer Nachricht bzw. eines Nachrichtenteils die übrigen eventuell noch gültigen Nachrichtenteile verworfen werden.

Zweckmäßigerweise kann mindestens ein Kommando als Teil innerhalb einer Nachricht bzw. eines Nachrichtenteils enthalten sein. Um ein Kommando aus Sicherheitsgründen zu schützen, kann aus dem Kommando eine gesicherte Nachricht bzw. ein gesicherter Nachrichtenteil erstellt werden. Somit kann aus dem Kommando eine Nachricht bzw. Nachrichtenteil erstellt werden, welche das Kommando in gesicherter Form enthalten. Indem das Kommando beispielsweise mit Sicherheitsmechanismen, wie z. B. Verschlüsselungen, geschützt wird, kann das Kommando den verschlüsselten bzw. verschlüsselungsrelevanten Teil der Nachricht bilden. Es besteht die Möglichkeit, dass eine Mehrzahl an Kommandos als Teil innerhalb einer Nachricht bzw. innerhalb eines Nachrichtenteils enthalten ist. Diese Mehrzahl an Kommandos kann beispielsweise den verschlüsselungsrelevanten Teil der Nachricht bilden. Es können mehrere Nachrichtenteile mit unterschiedlichen zeitlichen Gültigkeitsbereichen verwendet werden. Damit besteht die Möglichkeit, dass die Nachricht, insbesondere die Kommando-Nachricht, welche das jeweilige Kommando bzw. die Mehrzahl an Kommandos als Teil enthält, eine längere zeitliche Gültigkeit aufweist. Der Datensammler kann dadurch mit höherer Wahrscheinlichkeit ein Kommando innerhalb einer gültigen Nachricht an den Verbrauchszähler zustellen. Die Notwendigkeit der Neuberechnung des Nachrichtenteils, welcher das Kommando enthält, im Head-End-System kann damit entfallen.

Besonders zweckmäßig ist es, wenn sich die Nachrichtenteile, welche jeweils das Kommando enthalten, lediglich in ihrer zeitlich unterschiedlich begrenzten Gültigkeit voneinander unterscheiden. Außer der unterschiedlichen zeitlich begrenzten Gültigkeit, können die Nachrichtenteile der Mehrzahl an Nachrichtenteilen beispielsweise identisch sein.

Zweckmäßigerweise kann die zeitliche Gültigkeit des jeweiligen Nachrichtenteils durch eine Zeit-variable Größe bestimmt sein. Bei der Zeit-variablen Größe kann es sich beispielsweise um einen Zeitstempel handeln. Es kann sich z. B. ferner um einen Zähler handeln, welcher nach einem bestimmten Zeitintervall und/oder einem bestimmten Ereignis erhöht wird.

Vorteilhafterweise kann es sich bei der Zeit-variablen Größe um einen Nachrichtenzähler, einen sogenannten Message Counter (MC), handeln. Ferner kann die zentrale Stelle einen Kommando-Nachrichtenzähler und die Endstelle einen Verbrauchszähler-Nachrichtenzähler verwenden. Die Verwendung eines Nachrichtenzählers hat den Vorteil, dass ein Schutz vor Replay-Attacken besteht. Indem die Mehrzahl an Nachrichtenteilen für einen Bereich des Nachrichtenzählers bzw. des Kommando-Nachrichtenzählers vorberechnet werden, kann vorteilhafterweise der Gültigkeitsbereich erhöht werden. Es besteht die Möglichkeit, dass insbesondere eine Mehrzahl an Kommando-Nachrichten für einen Bereich des Kommando-Nachrichtenzählers vorberechnet wird. Im Verbrauchsdatenerfassungssystem wird keine neue Hardware notwendig und das Verfahren kann somit als Softwarelösung umgesetzt werden. Die einfache nachträgliche Möglichkeit der Implementierung verursacht lediglich geringe Kosten.

Vorteilhafterweise besteht die Möglichkeit, dass die zentrale Stelle bei der Erstellung der Mehrzahl an zeitlich begrenzt gültigen Nachrichtenteilen für jeden Nachrichtenteil einen unterschiedlichen Nachrichtenzähler, insbesondere Kommando-Nachrichtenzähler, verwendet. Der Kommando-Nachrichtenzähler kann beispielsweise nach jedem erstellten Nachrichtenteil inkrementiert werden. So können z. B. die Nachrichtenteile für Kommando-Nachrichtenzähler mit fortlaufenden Werten berechnet werden. Als Inkrement kann z. B. der Wert eins verwendet werden. Die in Verbrauchsdatenerfassungssystemen bestehenden Methoden zur Erstellung von Nachrichtenteilen auf Basis von Kommandos können somit übernommen werden, was einen geringen Implementierungsaufwand zum Vorteil hat.

Zweckmäßigerweise kann die Übertragung in dem primären bidirektionalen Kommunikationsweg in zeitlich begrenzten Empfangsfenstern erfolgen. Die Verbrauchszähler können beispielsweise ihre Empfangsfenster für einen begrenzten Zeitraum nach jedem Aussenden von Verbrauchdaten öffnen.

Besonders zweckmäßig ist es, wenn die Zwischenstelle den Wert der Zeit-variablen Größe ermittelt und aufgrund dessen einen Nachrichtenteil aus der Mehrzahl an Nachrichtenteilen auswählt. Die Gültigkeit eines Nachrichtenteils kann vom zuvor verwendeten Verbrauchszähler-Nachrichtenzähler des Ziel-Verbrauchszählers abhängen. Der Datensammler kann vorteilhafterweise den aktuellen Verbrauchszähler-Nachrichtenzähler kennen bzw. diesen z. B. durch eine zuvor vom Verbrauchszähler erhaltene Nachricht bestimmen. Es ist somit die Möglichkeit gegeben, die Entscheidung über den Kommando-Nachrichtenzähler bei der Übertragung zeitlich nach hinten zu verlagern. Dies hat zum Vorteil, dass die Flexibilität erhöht wird, um auf unvorhergesehene Umstände während der Übertragung reagieren zu können. Der Datensammler kann damit eigenständig Entscheidungen treffen und ist nicht auf ein ständiges Feedback des Head-End-Systems angewiesen.

Damit der vom Datensammler aus der Mehrzahl an Nachrichtenteilen ausgewählte Nachrichtenteil vom Verbrauchszähler als gültig erkannt werden kann, ist es vorteilhaft, dass die verwendete Zeit-variable Größe bestimmten Regeln folgt. Die Zeit-variable Größe des Nachrichtenteils kann zweckmäßigerweise von der Endstelle als gültig akzeptiert werden, wenn die Zeit-variable Größe des Nachrichtenteils größer als die Zeit-variable Größe der Endstelle ist und die Zeit-variable Größe des Nachrichtenteils kleiner als die Summe aus dem Wert der Zeit-variablen Größe der Endstelle und einem Integer-Wert größer null ist. In einer möglichen Ausgestaltung kann beispielsweise der Kommando-Nachrichtenzähler vom Verbrauchszähler als gültig akzeptiert werden, wenn der Kommando-Nachrichtenzähler größer als der Verbrauchszähler-Nachrichtenzähler ist und der Kommando-Nachrichtenzähler kleiner als die Summe aus Verbrauchszähler-Nachrichtenzähler und einem Integer-Wert größer null ist. In der Europäischen Norm EN 13757 ist beispielsweise der Integer-Wert mit 100 definiert. Dies hat zum Vorteil, dass eine Implementierung entsprechend der Norm EN 13757 möglich ist.

Der Nachrichtenteil und/oder die Mehrzahl an Nachrichtenteilen, insbesondere innerhalb einer oder mehrerer Nachrichten, wird vom Head-End-System über den Datensammler an den Verbrauchszähler gesendet und umfasst Kommando-Applikationsdaten. Um die Sicherheit zu erhöhen, kann der jeweilige Nachrichtenteil, welcher das Kommando umfasst, zweckmäßigerweise Sicherheitsparameter enthalten. Das Kommando bzw. die Kommando-Applikationsdaten können hierfür mit einem oder mehreren Sicherheitsmechanismen bzw. Sicherheitsparametern geschützt werden. Als Sicherheitsparameter können vorteilhafterweise Verschlüsselungen und/oder Nachrichtenauthentifizierungscodes (MAC) vorgesehen sein. Das Verfahren kann somit unter Verwendung der bereits vorhandenen Sicherheitsmechanismen implementiert werden.

Ein Kommando, insbesondere als Nachricht bzw. als Teil innerhalb einer Nachricht, welches an den Verbrauchszähler gesendet wird, kann einen Kommando-Nachrichtenzähler, Sicherheitsparameter, in deren Berechnung der Kommando-Nachrichtenzähler einfließt, und/oder Kommando-Applikationsdaten umfassen, welche wiederum mit mindestens einem Sicherheitsmechanismus geschützt sind, wofür ebenfalls der Kommando-Nachrichtenzähler verwendet werden kann. Der Verbrauchszähler sendet ferner nach einem Sendeschema, z. B. periodisch in bestimmten Zeitintervallen, Zähler-Applikationsdaten an den Datensammler.

Bei dem Verbrauchszähler kann es sich zweckmäßigerweise um einen bidirektionalen Verbrauchszähler handeln. Auf der Seite des Verbrauchszählers werden dabei die gleichen Sicherheitsmechanismen bzw. Sicherheitsparameter wie für die Erstellung von Nachrichtenteilen bzw. Nachrichten auf Basis von Kommandos und/oder Kommando-Nachrichten angewendet. Für jede Nachricht verwendet der Verbrauchszähler neben dem Schlüssel auch einen Nachrichtenzähler, den Verbrauchszähler-Nachrichtenzähler. Der Verbrauchszähler-Nachrichtenzähler kann in gleicher Weise wie der Kommando-Nachrichtenzähler nach jeder gesendeten Nachricht inkrementiert werden, beispielsweise um den Wert eins. Die Verbrauchszähler-Daten, welche vom Verbrauchszähler an den Datensammler gesendet werden, können einen Verbrauchszähler-Nachrichtenzähler, Sicherheitsparameter, in deren Berechnung der Verbrauchszähler-Nachrichtenzähler einfließt, und/oder Verbrauchszähler-Applikationsdaten enthalten, welche mit einem oder mehreren Sicherheitsmechanismen bzw. Sicherheitsparametern geschützt sind.

Zweckmäßigerweise sind die Sicherheitsparameter, die in die Berechnung der Sicherheitsmechanismen einfließen, nur in der zentralen Stelle und in der Endstelle verfügbar, jedoch nicht in der Zwischenstelle. Sofern ein Nachrichtenteil bzw. eine Mehrzahl an Nachrichtenteilen an den Verbrauchszähler geschickt werden soll, ist es notwendig, dass alle Berechnungen für die Nachrichtenteile bereits im Head-End-System durchgeführt worden sind. Das Head-End-System kann zur Berechnung der Nachrichtenteile beispielsweise einen bzw. eine Mehrzahl an verschiedenen Kommando-Nachrichtenzähler verwenden, welche zum voraussichtlichen Zeitpunkt der Aussendung des Nachrichtenteils innerhalb einer Nachricht vom Datensammler an den Verbrauchszähler gültig sind. Für die Vorausberechnung eines gültigen Kommando-Nachrichtenzählers können im Head-End-System Daten hinterlegt sein, die eine Berechnung des Verbrauchszähler-Nachrichtenzähler für einen bestimmten Zeitpunkt erlauben. So kann das Head-End-System beispielsweise einen zu einem früheren Zeitpunkt abgespeicherten Verbrauchszähler-Nachrichtenzähler und das bekannte Sendeschema des Verbrauchszählers verwenden, um einen gültigen Kommando-Nachrichtenzähler für einen bestimmten Zeitpunkt zu berechnen. Optional besteht die Möglichkeit, dass das Head-End-System die erstellten Nachrichtenteile bzw. den verschlüsselungsrelevanten Teil der Nachricht mit einer Ausführungszeit und/oder einer frühestens möglichen Ausführungszeit versieht. Die Flexibilität des Datensammlers wird damit erhöht, ohne Gefahr zu laufen das Sicherheitsrisiko zu erhöhen, was z. B. durch die Hinterlegung der Schlüssel für die Sicherheitsparameter im Datensammler eintreten könnte.

Indem die Mehrzahl an zeitlich unterschiedlich begrenzt gültigen Nachrichtenteilen von der Zwischenstelle, vorzugsweise als Liste, zwischenspeichert wird, ergibt sich der Vorteil, dass die Zwischenstelle zu einem späteren Zeitpunkt einen gültigen Nachrichtenteil aus der Mehrzahl an Nachrichtenteilen auswählen kann und diesen an die Endstelle weitersenden kann. Es ist dadurch nicht notwendig, dass der Datensammler sofort, insbesondere sofort bei Empfang der Mehrzahl an Nachrichtenteilen vom Head-End-System, einen gültigen Nachrichtenteil auswählt, was dessen Flexibilität und Effizienz erhöht.

Vorteilhafterweise kann die zentrale Stelle die Mehrzahl an zeitlich unterschiedlich begrenzt gültigen Nachrichtenteilen an die Zwischenstelle über tertiäre Kommunikationswege senden. So kann beispielsweise das Kommando in Form einer Liste bestehend aus einer Mehrzahl an Nachrichtenteilen als tertiäre Kommando-Nachricht an den Datensammler gesendet werden. Die im Verbrauchsdatenerfassungssystem vorhandenen Kommunikationswege können somit genutzt werden. Die Implementierung kann damit in einfacher Weise vollzogen werden, bei gleichzeitig geringen Kosten.

Ferner besteht die Möglichkeit, dass die Zwischenstelle den ausgewählten Nachrichtenteil an die Endstelle über primäre Kommunikationswege sendet. Der Datensammler kann den aus der Liste ausgewählten Nachrichtenteil beispielsweise nach dem Empfang einer Verbrauchszähler-Nachricht senden, welche die Verbrauchzähler-seitige Bereitstellung eines Empfangsfensters signalisiert. Es kann die Notwendigkeit bestehen, dass der Datensammler bei Aussendung des Nachrichtenteils bzw. der Nachricht das Verbrauchszähler-Empfangsfenster trifft. Sofern ein Verbrauchszähler vom Datensammler nur schlecht empfangen wird, kann es vorkommen, dass zum Zeitpunkt eines Empfangsfensters ein oder mehrere Nachrichtenteile in der Liste nicht mehr gültig sind. Die Nachrichtenteile der Liste können vorteilhafterweise bereits vom Head-End-System so berechnet werden, dass der gestörte Empfang des Ziel-Verbrauchszählers mit berücksichtigt wird.

Vorteilhafterweise kann das Ergebnis der Kommandoausführung als Feedback an die zentrale Stelle gesendet werden. Die erfolgreiche Übermittlung eines Kommandos innerhalb eines gültigen Nachrichtenteils bzw. einer gültigen Nachricht und/oder die Ausführung des Kommandos durch den Verbrauchszähler können zweckmäßigerweise dem Head-End-System mitgeteilt werden. Dadurch kann beispielsweise eine unnötige Berechnung eines weiteren Nachrichtenteils bzw. einer Liste an Nachrichtenteilen vermieden werden. Dies hat zum Vorteil, dass die vorhandenen Ressourcen durch das Feedback-System geschont werden können.

### Beschreibung der Erfindung anhand von Ausführunqsbeispielen

Zweckmäßige Ausgestaltungen der vorliegenden Erfindung werden anhand von Zeichnungsfiguren nachstehend näher erläutert. Es zeigen:
- Fig. 1a-b: vereinfachte schematische Schritte zur Erstellung einer Nachricht;
- Fig. 2: eine vereinfachte schematische Darstellung eines beispielhaften Verbrauchsdatenerfassungssystems;
- Fig. 3: einen beispielhaften vereinfachten schematischen zeitlichen Ablauf eines Sendevorgangs von Nachrichtenteilen auf Basis eines Kommandos;
- Fig. 4: eine beispielhafte vereinfachte schematische Sende- und Empfangssequenz zwischen Head-End-System, Datensammler und Verbrauchszähler.

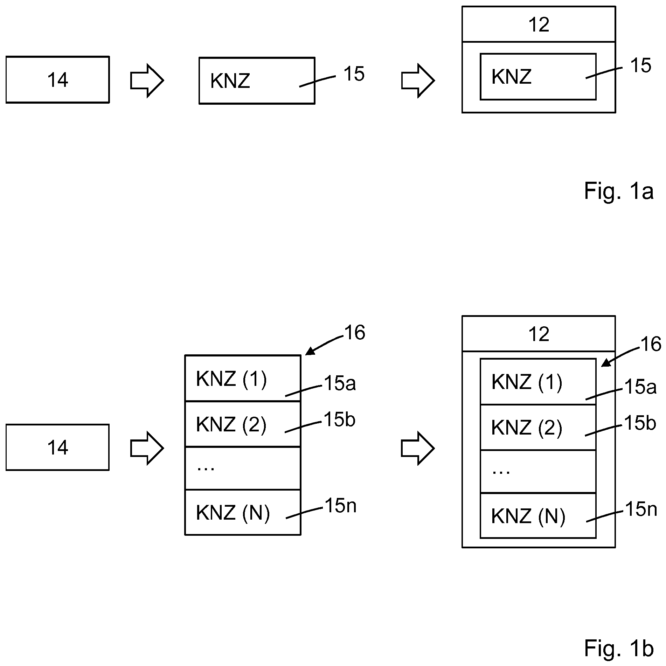

Fig. 1a-b zeigen vereinfachte schematische Schritte zur Erstellung einer tertiären Kommando-Nachricht 12 ausgehend von einem zu sendenden Kommando 14. In Fig. 1a wird das Kommando 14 im ersten Schritt mittels eines Kommando-Nachrichtenzählers KNZ verschlüsselt und bildet einen Nachrichtenteil 15. In einem zweiten Schritt bildet das so verschlüsselte Kommando 14 einen Nachrichtenteil 15 innerhalb einer tertiären Kommando-Nachricht 12, welche vom Head-End-System 1 an einen Datensammler 2 gesendet wird. Die Gültigkeit des Nachrichtenteils 15 bzw. der tertiären Kommando-Nachricht 12 ist von der Gültigkeit des verwendeten Kommando-Nachrichtenzählers KNZ abhängig. In Fig. 1b wird das Kommando 14 in einem ersten Schritt mittels einer Mehrzahl an Kommando-Nachrichtenzählern KNZ (1) - KNZ (N) verschlüsselt. Ausgehend von einem Kommando 14 wird somit eine Liste an Nachrichtenteilen 15a - 15n mit unterschiedlichen Verschlüsselungen erstellt. Die Mehrzahl 16 so verschlüsselter Nachrichtenteile 15a - 15n bilden in einem zweiten Schritt den verschlüsselten Teil einer tertiären Kommando-Nachricht 12. Da die Kommando-Nachrichtenzähler KNZ (1) - KNZ (N) unterschiedliche Gültigkeitsbereiche abdecken, kann durch die Mehrzahl 16 der verschlüsselten Nachrichtenteile 15a - 15n die Gültigkeit des Kommandos 14 innerhalb eines Nachrichtenteils 15a - 15n bzw. die Gültigkeit der tertiären Kommando-Nachricht 12 verlängert werden.

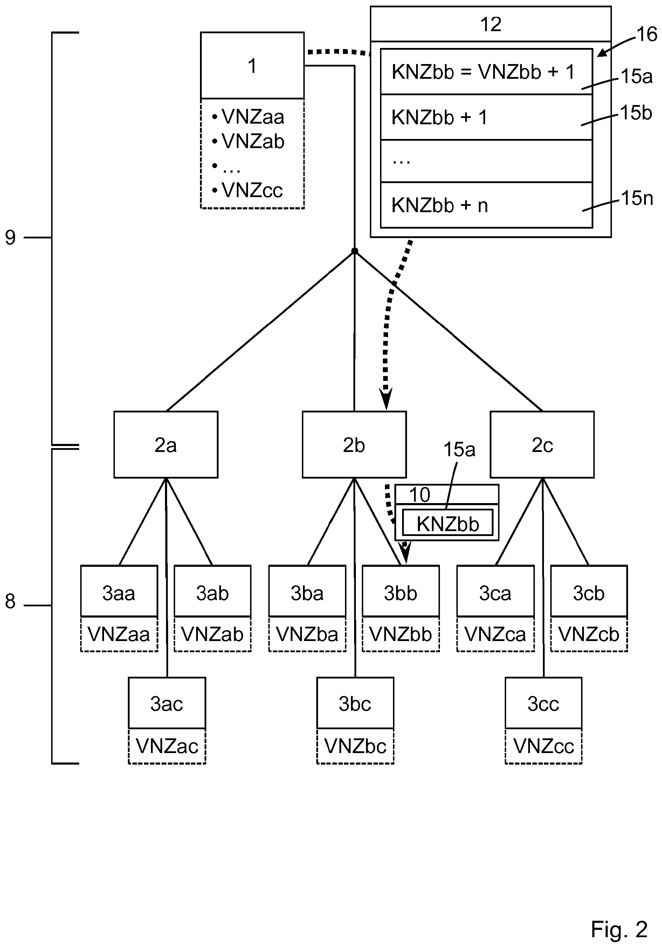

Fig. 2 zeigt eine schematische Darstellung eines Verbrauchsdatenerfassungssystems per Funk mit einem primären Kommunikationssystem 8 sowie tertiärem Kommunikationssystem 9. Das tertiäre Kommunikationssystem 9 umfasst ein Head-End-System 1 sowie mehrere, z. B. drei, Datensammler 2a - 2c. Das primäre Kommunikationssystem 8 umfasst die vorgenannten Datensammler sowie mehrere Verbrauchszähler, wobei für jeden Datensammler 2 exemplarisch drei untergeordnete Verbrauchszähler 3aa - 3cc dargestellt sind. Die Verbrauchszähler 3aa - 3cc stehen nicht direkt mit dem tertiären Kommunikationssystem 9 in Verbindung, sondern somit lediglich indirekt über die entsprechenden Datensammler 2a - 2c.

Jeder Verbrauchszähler 3aa - 3cc verfügt über einen individuellen Verbrauchszähler-Nachrichtenzähler VNZaa - VNZcc. Beim Head-End-System 1 sind die individuellen Verbrauchszähler-Nachrichtenzähler VNZaa - VNZcc hinterlegt. Weiterhin sind Daten im Head-End-System 1 hinterlegt, die eine Berechnung eines Verbrauchszähler-Nachrichtenzähler VNZaa - VNZcc für einen bestimmten Zeitpunkt erlauben. Sofern beispielsweise das Sendeschema bzw. die Sendeintervalle des Verbrauchszählers z. B. 3bb im Head-End-System 1 hinterlegt sind, können Verbrauchszähler-Nachrichtenzähler z. B VNZbb vorausberechnet werden. Somit kann das Head-End-System 1 zum Erstellen der tertiären Kommando-Nachricht 12 mit der Mehrzahl 16 an Nachrichtenteilen 15a - 15n die benötigten Kommando-Nachrichtenzähler KNZ ausgehend von den jeweiligen Verbrauchszähler-Nachrichtenzählern VNZaa - VNZcc bestimmen. Die Kommando-Nachrichtenzähler KNZ müssen dafür größer als der jeweilige Verbrauchszähler-Nachrichtenzähler VNZaa - VNZcc sein und z. B. kleiner als die Summe aus dem entsprechenden Verbrauchszähler-Nachrichtenzähler VNZaa - VNZcc und einem Integer-Wert größer null.

Um beispielsweise ein Kommando 14 an den Verbrauchszähler 3bb zu senden, erstellt das Head-End-System 1 eine Mehrzahl 16 an Nachrichtenteilen 15a - 15n auf Basis des Kommandos 14, welche unter Verwendung der entsprechenden Kommando-Nachrichtenzähler KNZbb erstellt werden. Somit geht das Head-End-System 1 beispielsweise zur Adressierung des Verbrauchszählers 3bb von dessen Verbrauchszähler-Nachrichtenzähler VNZbb aus und inkrementiert diesen um den Wert eins für den ersten Nachrichtenteil 15a, um den Kommando-Nachrichtenzähler KNZbb zu erhalten. Für die weiteren Nachrichtenteile 15b bis 15n der Mehrzahl 16 an Nachrichtenteilen 15a bis 15n wird der Kommando-Nachrichtenzähler KNZbb jeweils wiederum um den Wert eins inkrementiert, bis zu einem oberen Wert n, welcher z. B. 100 sein kann. Sofern der Kommando-Nachrichtenzähler KNZbb für die Verschlüsselung der Nachrichtenteile 15a - 15n auf Basis des Kommandos 14 verwendet wird, erstellt das Head-End-System 1 somit eine Mehrzahl 16 an Nachrichtenteilen 15a bis 15n mit verschiedenen Verschlüsselungen. Jeder dieser Nachrichtenteile 15a bis 15n kann den verschlüsselten Teil einer primären Kommando-Nachricht 10 bilden. Die so erstellte Mehrzahl 16 an Nachrichtenteilen 15a bis 15n wird an den entsprechenden Datensammler 2b als tertiäre Kommando-Nachricht 12 gesendet, welcher die Mehrzahl 16 an Nachrichtenteilen 15a bis 15n zwischenspeichert, z. B. in Form einer Liste. Der Datensammler 2b wählt aus der Mehrzahl 16 einen gültigen Nachrichtenteil 15a aus, indem die verwendeten Kommando-Nachrichtenzähler KNZbb+1 bis KNZbb+n mit dem aktuellen Wert des Verbrauchszähler-Nachrichtenzählers VNZbb des Verbrauchszählers 3bb verglichen werden. Der ausgewählte gültige Nachrichtenteil 15a, hier z. B. KNZbb, wird anschließend als bzw. innerhalb einer primären Kommando-Nachricht 10 an den Verbrauchszähler 3bb gesendet.

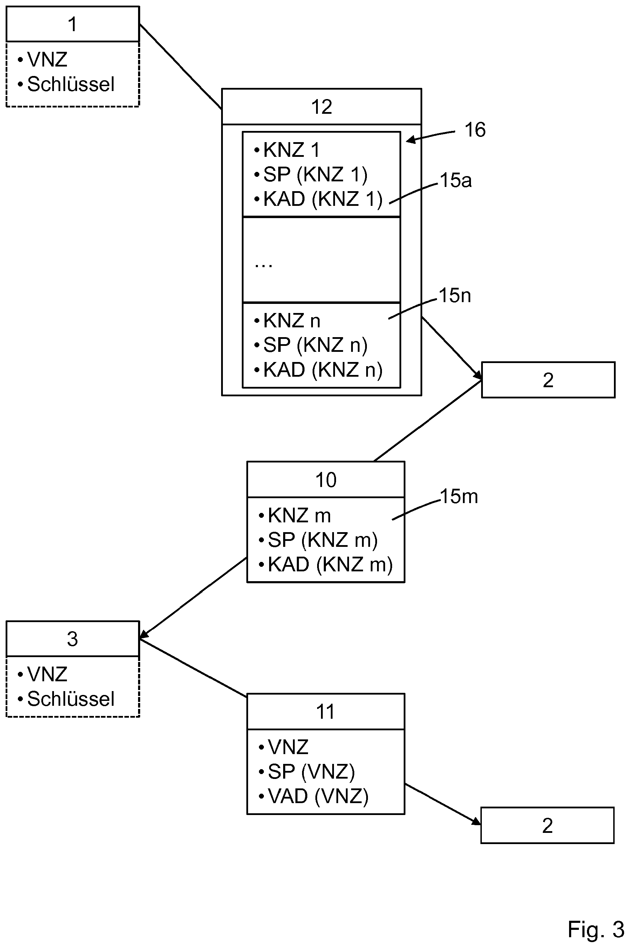

Fig. 3 zeigt einen vereinfachten schematischen zeitlichen Ablauf des Sendevorgangs eines Kommandos 14 vom Head-End-System 1 über einen Datensammler 2 zu einem Verbrauchszähler 3. Das Head-End-System 1 verfügt über den aktuellen Verbrauchszähler-Nachrichtenzähler VNZ des Ziel-Verbrauchszählers 3 und über Schlüssel für die Sicherheitsmechanismen. Die auf Basis des Kommandos 14 erstellten Nachrichtenteile 15a - 15n enthalten Kommando-Nachrichtenzähler KNZ 1 - KNZ n, Sicherheitsparameter SP (KNZ 1) - SP (KNZ n), wie z. B. MAC, in deren Berechnung der Kommando-Nachrichtenzähler KNZ einfließt, sowie Kommando-Applikationsdaten KAD. Die Kommando-Applikationsdaten KAD (KNZ 1) - KAD (KNZ n) sind mit einem oder mehreren Sicherheitsmechanismen geschützt, wie z. B. MAC oder Verschlüsselung, wofür ebenso der Kommando-Nachrichtenzähler KNZ verwendet wird. Das Head-End-System 1 generiert ausgehend vom zu sendenden Kommando 14 eine Mehrzahl 16 an Nachrichtenteilen 15a bis 15n, die sich darin unterscheiden, dass für jeden Nachrichtenteil 15a bis 15n ein anderer Kommando-Nachrichtenzähler KNZ 1 bis KNZ n verwendet wird. Somit umfasst die Mehrzahl 16 an Nachrichtenteilen 15a bis 15n solche, welche die Kommando-Nachrichtenzähler KNZ 1 - KNZ n, Sicherheitsparameter SP (KNZ 1) - SP (KNZ n), sowie Kommando-Applikationsdaten KAD (KNZ 1) - KAD (KNZ n) beinhalten.

Der Datensammler 2 wählt einen gültigen Nachrichtenteil 15m aus der Mehrzahl 16 an Nachrichtenteilen 15a bis 15n aus und sendet diesen weiter an den Verbrauchszähler 3. Der ausgewählte Nachrichtenteil 15m umfasst einen Kommando-Nachrichtenzähler KNZ m, Sicherheitsparameter SP (KNZ m), sowie Kommando-Applikationsdaten KAD (KNZ m), wobei m im Bereich von 1 bis n liegt.

Der Verbrauchszähler 3 verfügt über einen Verbrauchszähler-Nachrichtenzähler VNZ sowie über Schlüssel zum Entschlüsseln der Sicherheitsparameter. Somit verfügen lediglich das Head-End-System 1 und der entsprechende Verbrauchszähler 3 über die Schlüssel der Sicherheitsparameter. Der Datensammler 2 verfügt nicht über die Schlüssel und kann folglich weder die Nachrichtenteile 15a bis 15n entschlüsseln noch neue Nachrichtenteile 15a bis 15n auf Basis des Kommandos 14 berechnen und/oder verschlüsseln.

Der Verbrauchszähler 3 sendet wiederum nach einem bestimmten Sendeschema, z. B. periodisch nach festgelegten Zeitabständen, Verbrauchszähler-Applikationsdaten VAD an den Datensammler 2. Der Verbrauchszähler 3 verwendet für deren Berechnung die gleichen Sicherheitsmechanismen wie sie das Head-End-System 1 bei der Berechnung der Nachrichtenteile 15a bis 15n anwendet. Neben dem Schlüssel verwendet der Verbrauchszähler 3 einen Verbrauchszähler-Nachrichtenzähler VNZ. Der Verbrauchszähler-Nachrichtenzähler VNZ wird nach jeder Sendung erhöht, z. B. um den Wert 1. Die primäre Zähler-Nachricht 11 umfasst somit den Verbrauchszähler-Nachrichtenzähler VNZ, Sicherheitsparameter SP (VNZ), wie z. B. einen MAC, in welchen beispielsweise der Verbrauchszähler-Nachrichtenzähler VNZ einfließt, sowie die Verbrauchszähler-Applikationsdaten VAD (VNZ), welche mit mindestens einem Sicherheitsmechanismus, wie beispielsweise einem MAC und/oder einer Verschlüsselung, berechnet werden. Für die Erzeugung der Verbrauchszähler-Applikationsdaten VAD (VNZ) wird ebenfalls der Verbrauchszähler-Nachrichtenzähler VNZ verwendet.

Damit der vom Datensammler 2 weiter gesendete Nachrichtenteil 15m beim Verbrauchszähler 3 als gültig erkannt wird, muss der entsprechende Kommando-Nachrichtenzähler KNZ m bestimmten festgelegten Regeln folgen. Beispielsweise werden in der Norm EN 13757 solche Regeln beschrieben. Danach ist Voraussetzung für die Gültigkeit eines Nachrichtenteils 15m, dass der Kommando-Nachrichtenzähler KNZ m größer ist als der Verbrauchszähler-Nachrichtenzähler VNZ und dass gleichzeitig der Kommando-Nachrichtenzähler KNZ m kleiner ist als die Summe aus Verbrauchszähler-Nachrichtenzähler VNZ und einem festgelegten Wert, z. B. dem Wert 100.

Würde das Head-End-System 1 lediglich einen einzelnen Nachrichtenteil 15 auf Basis des Kommandos 14 schicken, würde dieser seine Gültigkeit nur so lange behalten, wie sich der Kommando-Nachrichtenzähler KNZ innerhalb eines festgelegten Bereichs befindet, beispielsweise der Bereich, der gemäß der Norm EN 13757 durch den Verbrauchszähler-Nachrichtenzähler VNZ festgelegt wird. Durch ein periodisches Sendeschema des Verbrauchszählers 3, bei dem bei jeder Sendung der Verbrauchszähler-Nachrichtenzähler VNZ um einen bestimmten Wert, für gewöhnlich um den Wert 1, erhöht wird, ergibt sich so eine maximale zeitliche Gültigkeit eines mittels Kommando-Nachrichtenzähler KNZ berechneten Nachrichtenteils 15.

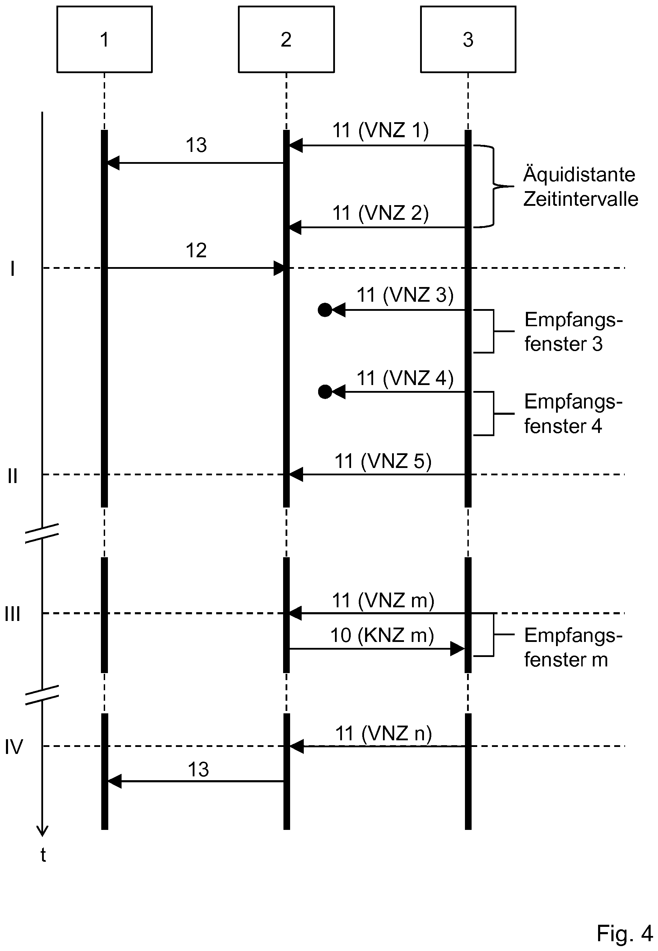

In Fig. 4 sind die prinzipiellen Sende- und Empfangssequenzen zwischen Head-End-System 1, Datensammler 2 und Verbrauchszähler 3 für das Senden und Empfangen eines Nachrichtenteils 15 auf Basis eines Kommandos 14 gezeigt. Die Schlüssel, welche in die Berechnungen der Sicherheitsmechanismen einfließen sind nur im Head-End-System 1 und im Verbrauchszähler 3 vorhanden. Der Datensammler 2 verfügt nicht über die entsprechenden Schlüssel. Alle Berechnungen für einen Nachrichtenteil 15 auf Basis eines Kommandos 14 vom Head-End-System 1 an einen Verbrauchszähler 3 müssen somit im Head-End-System 1 durchgeführt werden. Damit der im Head-End-System 1 berechnete Nachrichtenteil 15 am Verbrauchzähler 3 gültig ist, muss das Head-End-System 1 einen Kommando-Nachrichtenzähler KNZ verwenden, welcher zum voraussichtlichen Zeitpunkt der Zusendung des Nachrichtenteils 15 vom Datensammler 2 an den Verbrauchszähler 3 im Bereich der gültigen Kommando-Nachrichtenzähler KNZ liegen wird. Um einen gültigen Kommando-Nachrichtenzähler KNZ zu verwenden, kann das Head-End-System 1 beispielsweise von einem zu einem früheren Zeitpunkt abgespeicherten Verbrauchszähler-Nachrichtenzähler VNZ aus, unter Verwendung des bekannten Sendeschemas des Verbrauchszähler 3, einen Kommando-Nachrichtenzähler KNZ vorausberechnen.

Durch das Sendeschema werden zudem die Zeitpunkte der möglichen Empfangsfenster des Verbrauchszählers 3 bestimmt. Dadurch ergeben sich äquidistante Zeitintervalle zwischen den primären Verbrauchszähler-Nachrichten 11.

Der Verbrauchszähler 3 öffnet die Empfangsfenster für Kommandos 14 innerhalb von Nachrichtenteilen 15 für kurze Zeit nach der Aussendung einer primären Verbrauchszähler-Nachricht 11. Damit ist der exakte Zeitpunkt bestimmt, zu dem der Datensammler 2 in Abhängigkeit zur Ausführungszeit bzw. zum Kommando-Nachrichtenzähler KNZ das Kommando 14 innerhalb eines Nachrichtenteils 15 an den Verbrauchszähler 3 senden kann. So sind beispielhaft die Empfangsfenster 3, 4 und m für die entsprechenden primären Verbrauchszähler-Nachrichten 11 (VNZ 3), 11 (VNZ 4) sowie 11 (VNZ m) eingezeichnet.

Vorteilhafterweise kann das Head-End-System 1 anstatt nur eines Nachrichtenteils 15 auf Basis des Kommandos 14 mit einem zu einem zukünftigen Zeitpunkt gültigen Kommando-Nachrichtenzähler KNZ, eine Mehrzahl 16 an Nachrichtenteilen 15a - 15n auf Basis des Kommandos 14 berechnen, welche jeweils einen anderen Kommando-Nachrichtenzähler KNZ aufweisen und somit zu einem unterschiedlichen zukünftigen Zeitpunkt gültig sein werden. Die Prüfung der möglichen Gültigkeit eines Nachrichtenteils, z. B. 15a, auf Basis eines Kommandos 14 aus der Mehrzahl 16 an Nachrichtenteilen 15a bis 15n findet dabei durch den Datensammler 2 statt.

Der prinzipielle Ablauf in Fig. 4 beginnt mit einer primären Verbrauchszähler-Nachricht 11 (VNZ 1), welche beispielsweise den Verbrauchszähler-Nachrichtenzähler VNZ 1 aufweist. Der Verbrauchszähler-Nachrichtenzähler VNZ wird nach jeder vom Verbrauchszähler 3 gesendeten Nachricht erhöht, z. B. um den Wert 1. Diese primäre Verbrauchszähler-Nachricht 11 (VNZ 1) wird vom Datensammler 2 empfangen und anschließend, mindestens einmalig, an das Head-End-System 1 als tertiäre Verbrauchszähler-Nachricht 13 weiter geleitet. Es besteht die Möglichkeit, dass nicht jede vom Datensammler 2 empfangene primäre Verbrauchszähler-Nachricht 11 (VNZ 1) an das Head-End-System 1 weitergeleitet wird. Das Head-End-System 1 speichert die Empfangszeit und den verwendeten Verbrauchszähler-Nachrichtenzähler VNZ 1 ab. Das Head-End-System 1 kennt zudem das Sendeschema des Verbrauchszählers 3, so dass zukünftig gültige Verbrauchszähler-Nachrichtenzähler VNZ vorausberechnet werden können. Als zweite Nachricht sendet der Verbrauchszähler 3 die primäre Verbrauchszähler-Nachricht 11 (VNZ 2), die vom Datensammler 2 empfangen wird.

Zum Zeitpunkt I schickt das Head-End-System 1 eine Mehrzahl 16 von erstellten Nachrichtenteilen 15c bis 15m für die zukünftigen Verbrauchszähler-Nachrichtenzähler VNZ 3 bis VNZ m als tertiäre Kommando-Nachricht 12 an den Datensammler 2. Die einzelnen Nachrichtenteile 15c bis 15m der Mehrzahl 16 an Nachrichtenteilen 15c bis 15m können zweckmäßigerweise mit einer optionalen Ausführungszeit oder einer frühestens möglichen Ausführungszeit versehen sein, wobei die Ausführungszeit z. B. auch sofort sein kann. Der Datensammler 2 speichert die Mehrzahl 16 an Nachrichtenteilen 15c bis 15m, z. B. in Form einer Liste, und kann zur entsprechenden Ausführungszeit prüfen, welcher auf Basis des Kommandos 14 erstellte Nachrichtenteil 15 noch gültig ist, indem der aktuelle Verbrauchszähler-Nachrichtenzähler VNZ überprüft wird.

Die primären Verbrauchszähler-Nachrichten 11 (VNZ 3) und 11 (VNZ 4) werden beispielsweise nicht vom Datensammler 2 empfangen. Sobald der Datensammler 2 die primäre Verbrauchszähler-Nachricht 11 (VNZ 5) zum Zeitpunkt II erhält, verwirft der Datensammler 2 aus der Mehrzahl 16 an Nachrichtenteilen 15c bis 15m die Nachrichtenteile 15c und 15d mit den Kommando-Nachrichtenzählern KNZ 3 und KNZ 4 als ungültig.

Zum Zeitpunkt III empfängt der Datensammler 2 die primäre Verbrauchszähler-Nachricht 11 (VNZ m) mit Verbrauchszähler-Nachrichtenzähler VNZ m. Der Datensammler 2 sucht aus der Mehrzahl 16 an Nachrichtenteilen 15e bis 15m den Nachrichtenteil 15m mit dem Kommando-Nachrichtenzähler KNZ m aus, um ihn im Empfangsfenster m als bzw. innerhalb der primären Kommando-Nachricht 10 (KNZ m) an den Verbrauchszähler 3 zu senden.

Um das Ergebnis der Kommandoausführung an das Head-End-System 1 zu senden, wird zum Zeitpunkt IV vom Verbrauchszähler 3 unter Verwendung eines Verbrauchzähler-Nachrichtenzählers VNZ n eine Bestätigung an den Datensammler 2 gesendet. Dieser leitet die empfangene Bestätigung als tertiäre Verbrauchszähler-Nachricht 13 an das Head-End-System 1 weiter. Nach dem Empfang des Kommandos 14 innerhalb eines Nachrichtenteils 15 kann die Bestätigung durch den Verbrauchszähler 3 mit der nächsten primären Verbrauchszähler-Nachricht 11 (VNZ n) erfolgen. Hierbei wäre n ein Inkrement von m. Die Bestätigung kann auch erst zu einem späteren Zeitpunkt erfolgen.

### BEZUGSZEICHENLISTE

- 1: Head-End-System
- 2: Datensammler
- 3: Verbrauchszähler

- 8: primäres Kommunikationssystem
- 9: tertiäres Kommunikationssystem
- 10: primäre Kommando-Nachricht
- 11: primäre Verbrauchszähler-Nachricht
- 12: tertiäre Kommando-Nachricht
- 13: tertiäre Verbrauchszähler-Nachricht
- 14: Kommando
- 15: Nachrichtenteil
- 16: Mehrzahl an Nachrichtenteilen

## Patentansprüche

1. Verfahren zum Betrieb eines Datenerfassungssystems, vorzugsweise Verbrauchsdatenerfassungssystem, mit einer zentralen Stelle, insbesondere einem Head-End-System (1), einer Zwischenstelle, insbesondere einem Datensammler (2), sowie einer Endstelle, insbesondere einem Verbrauchszähler (3),
wobei die zentrale Stelle und die Zwischenstelle einen tertiären bidirektionalen Kommunikationsweg festlegen,
wobei die Zwischenstelle und die Endstelle einen primären bidirektionalen Kommunikationsweg per Funk festlegen,
wobei in der zentralen Stelle auf Basis eines Kommandos (14) ein zeitlich begrenzt gültiger Nachrichtenteil (15) unter Verwendung von Parametern erstellt wird,
wobei zur Datenübertragung der Nachrichtenteil (15) von der zentralen Stelle in einer Nachricht (12) an die Zwischenstelle gesendet wird, und
wobei der Nachrichtenteil (15) von der Zwischenstelle weiter an die Endstelle gesendet wird, sofern der Nachrichtenteil (15) noch gültig ist, wobei
in der zentralen Stelle auf Basis eines Kommandos (14) eine Mehrzahl (16) an zeitlich unterschiedlich begrenzt gültigen Nachrichtenteilen (15a bis 15d) erzeugt wird,
**dadurch gekennzeichnet, dass**
die Mehrzahl (16) an zeitlich begrenzt gültigen Nachrichtenteilen (15a bis 15d) von der zentralen Stelle in einer Nachricht (12) an die Zwischenstelle gesendet wird,
die Gültigkeit der Nachrichtenteile (15a bis 15d) in der Zwischenstelle überprüft wird, und
sofern ein Nachrichtenteil (z. B. 15a) zum Senden von der Zwischenstelle an die Endstelle noch gültig ist, der betreffende Nachrichtenteil (z. B. 15a) innerhalb einer Nachricht (10) von der Zwischenstelle an die Endstelle gesendet wird.

2. Verfahren nach Anspruch 1, **dadurch gekennzeichnet, dass** mindestens ein Kommando (14) als Teil innerhalb einer Nachricht (10) enthalten ist.

3. Verfahren nach Anspruch 1 oder 2, **dadurch gekennzeichnet, dass** sich die Nachrichtenteile (15a bis 15d) lediglich in ihrer zeitlich unterschiedlich begrenzten Gültigkeit voneinander unterscheiden.

4. Verfahren nach einem der vorhergehenden Ansprüche, **dadurch gekennzeichnet, dass** die zeitliche Gültigkeit des jeweiligen Nachrichtenteils (15a bis 15d) durch eine Zeit-variable Größe bestimmt ist, wobei es sich bei der Zeit-variablen Größe vorzugsweise um einen Nachrichtenzähler handelt.

5. Verfahren nach Anspruch 4, **dadurch gekennzeichnet, dass** die zentrale Stelle einen Kommando-Nachrichtenzähler und die Endstelle einen Verbrauchszähler-Nachrichtenzähler verwendet.

6. Verfahren nach Anspruch 4 oder 5, **dadurch gekennzeichnet, dass** die zentrale Stelle bei der Erstellung der Mehrzahl (16) an zeitlich begrenzt gültigen Nachrichtenteilen (15a bis 15d) für jeden Nachrichtenteil (15a bis 15d) einen unterschiedlichen Nachrichtenzähler verwendet.

7. Verfahren nach einem der vorhergehenden Ansprüche, **dadurch gekennzeichnet, dass** die Übertragung in dem primären bidirektionalen Kommunikationsweg in zeitlich begrenzten Empfangsfenstern erfolgt.

8. Verfahren nach einem der vorhergehenden Ansprüche 4 bis 7, **dadurch gekennzeichnet, dass** die Zwischenstelle den Wert der Zeit-variablen Größe ermittelt und aufgrund dessen einen Nachrichtenteil (z. B. 15a) aus der Mehrzahl (16) an Nachrichtenteilen (15a bis 15d) auswählt.

9. Verfahren nach einem der vorhergehenden Ansprüche 4 bis 8, **dadurch gekennzeichnet, dass** die Zeit-variable Größe des Nachrichtenteils (z. B. 15a) von der Endstelle als gültig akzeptiert wird, wenn die Zeit-variable Größe des Nachrichtenteils (z. B. 15a) größer als die Zeit-variable Größe der Endstelle ist und die Zeit-variable Größe des Nachrichtenteils (z. B. 15a) kleiner als die Summe aus dem Wert der Zeit-variablen Größe der Endstelle und einem Integer-Wert größer null ist.

10. Verfahren nach einem der vorhergehenden Ansprüche, **dadurch gekennzeichnet, dass** der jeweilige Nachrichtenteil (15a bis 15d) Sicherheitsparameter enthält, wobei als Sicherheitsparameter vorzugsweise Verschlüsselungen und/oder Nachrichtenauthentifizierungscodes (MAC) vorgesehen sind.

11. Verfahren nach Anspruch 10, **dadurch gekennzeichnet, dass** die Sicherheitsparameter nur in der zentralen Stelle und in der Endstelle verfügbar sind, jedoch nicht in der Zwischenstelle.

12. Verfahren nach einem der vorhergehenden Ansprüche, **dadurch gekennzeichnet, dass** die Mehrzahl (16) an zeitlich unterschiedlich begrenzt gültigen Nachrichtenteilen (15a bis 15d) von der Zwischenstelle, vorzugsweise als Liste, zwischenspeichert wird.

13. Verfahren nach einem der vorhergehenden Ansprüche, **dadurch gekennzeichnet, dass** die zentrale Stelle die Mehrzahl (16) an zeitlich unterschiedlich begrenzt gültigen Nachrichtenteilen (15a bis 15d) an die Zwischenstelle über tertiäre Kommunikationswege sendet.

14. Verfahren nach einem der vorhergehenden Ansprüche, **dadurch gekennzeichnet, dass** die Zwischenstelle den ausgewählten Nachrichtenteil (z. B. 15a) an die Endstelle über primäre Kommunikationswege sendet.

15. Verfahren nach einem der vorhergehenden Ansprüche, **dadurch gekennzeichnet, dass** das Ergebnis der Kommandoausführung als Feedback an die zentrale Stelle gesendet wird.

## Claims

1. Method for operating a data recording system, preferably a consumption data recording system, with a central station, in particular a head-end system (1), an intermediate station, in particular a data collector (2), and a terminal station, in particular a consumption meter (3),
wherein the central station and the intermediate station define a tertiary, two-way communication path,
wherein the intermediate station and the terminal station define a primary, two-way communication path via a radio link,
wherein a message part (15) which is valid for a limited time is created in the central station on the basis of a command (14) using parameters,
wherein the message part (15) is transmitted from the central station to the intermediate station in a message (12) for the data transmission, and
wherein the message part (15) is forwarded from the intermediate station to the terminal station if the message part (15) is still valid, wherein
a plurality (16) of message parts (15a to 15d) which have different validity time limits are generated in the central station on the basis of a command (14), **characterized in that**
the plurality (16) of message parts (15a to 15d) which are valid for a limited time are transmitted from the central station to the intermediate station in a message (12),
the validity of the message parts (15a to 15d) is checked in the intermediate station, and
if a message part (e.g. 15a) is still valid for transmission from the intermediate station to the terminal station, the message part concerned (e.g. 15a) is transmitted within a message (10) from the intermediate station to the terminal station.

2. Method according to Claim 1, **characterized in that** at least one command (14) is contained as a part within a message (10).

3. Method according to Claim 1 or 2, **characterized in that** the message parts (15a to 15d) differ from one another only in terms of their different validity time limits.

4. Method according to one of the preceding claims, **characterized in that** the time validity of the respective message part (15a to 15d) is defined by a time-variable parameter, wherein the time-variable parameter is preferably a message counter.

5. Method according to Claim 4, **characterized in that** the central station uses a command message counter and the terminal station uses a consumption meter message counter.

6. Method according to Claim 4 or 5, **characterized in that** the central station, when creating the plurality (16) of message parts (15a to 15d) which are valid for a limited time, uses a different message counter for each message part (15a to 15d).

7. Method according to one of the preceding claims, **characterized in that** the transmission in the primary, two-way communication path takes place in time-limited reception windows.

8. Method according to one of the preceding Claims 4 to 7, **characterized in that** the intermediate station determines the value of the time-variable parameter and selects a message part (e.g. 15a) from the plurality (16) of message parts (15a to 15d) on the basis of said value.

9. Method according to one of the preceding Claims 4 to 8, **characterized in that** the time-variable parameter of the message part (e.g. 15a) is accepted as valid by the terminal station if the time-variable parameter of the message part (e.g. 15a) is greater than the time-variable parameter of the terminal station and the time-variable parameter of the message part (e.g. 15a) is less than the sum of the value of the time-variable parameter of the terminal station and an integer value greater than zero.

10. Method according to one of the preceding claims, **characterized in that** the respective message part (15a to 15d) contains security parameters, wherein encryptions and/or message authentication codes (MACs) are preferably provided as security parameters.

11. Method according to Claim 10, **characterized in that** the security parameters are available only in the central station and in the terminal station, but not in the intermediate station.

12. Method according to one of the preceding claims, **characterized in that** the plurality (16) of message parts (15a to 15d) which have different validity time limits are temporarily stored by the intermediate station, preferably as a list.

13. Method according to one of the preceding claims, **characterized in that** the central station transmits the plurality (16) of message parts (15a to 15d) which have different validity time limits to the intermediate station via tertiary communication paths.

14. Method according to one of the preceding claims, **characterized in that** the intermediate station transmits the selected message part (e.g. 15a) to the terminal station via primary communication paths.

15. Method according to one of the preceding claims, **characterized in that** the result of the command execution is transmitted as feedback to the central station.

## Revendications

1. Procédé d'exploitation d'un système d'acquisition de données, de préférence d'un système d'acquisition de données de consommation, comprenant un poste central, en particulier un système tête de réseau (1), un poste intermédiaire, en particulier un collecteur de données (2), ainsi qu'un poste terminal, en particulier un compteur de consommation (3),
le poste central et le poste intermédiaire fixant un chemin de communication bidirectionnel tertiaire,
le poste intermédiaire et le poste terminal fixant un chemin de communication bidirectionnel primaire par radio,
dans lequel, au poste central, sur la base d'une instruction (14), une partie de message (15) à validité limitée dans le temps est créée en utilisant des paramètres,
dans lequel, pour la transmission de données, la partie de message (15) est envoyée dans un message (12) du poste central au poste intermédiaire, et
la partie de message (15) étant retransmise par le poste intermédiaire au poste terminal à condition que la partie de message (15) soit toujours valable, dans lequel
au poste central, sur la base d'une instruction (14), une pluralité (16) de parties de message (15a à 15d) à validité limitée dans le temps différente est générée,
**caractérisé en ce que** la pluralité (16) de parties de message (15a à 15d) à validité limitée dans le temps est envoyée dans un message (12) du poste central au poste intermédiaire,
la validité des parties de message (15a à 15d) est vérifiée au poste intermédiaire, et
à condition qu'une partie de message (par exemple 15a) soit toujours valable pour un envoi du poste intermédiaire au poste terminal, la partie de message (par exemple 15a) en question est envoyée dans un message (10) du poste intermédiaire au poste terminal.

2. Procédé selon la revendication 1, **caractérisé en ce qu'**au moins une instruction (14) est contenue comme une partie dans un message (10).

3. Procédé selon la revendication 1 ou 2, **caractérisé en ce que** les parties de message (15a à 15d) se distinguent uniquement par leur validité limitée dans le temps différente.

4. Procédé selon l'une quelconque des revendications précédentes, **caractérisé en ce que** la validité dans le temps de la partie de message respective (15a à 15d) est déterminée par une grandeur variable dans le temps, la grandeur variable dans le temps étant de préférence un compteur de messages.

5. Procédé selon la revendication 4, **caractérisé en ce que** le poste central utilise un compteur de messages d'instruction et le poste terminal utilise un compteur de messages de compteur de consommation.

6. Procédé selon la revendication 4 ou 5, **caractérisé en ce que** lors de la création de la pluralité (16) de parties de message (15a à 15d) à validité limitée dans le temps, le poste central utilise un compteur de message différent pour chaque partie de message (15a à 15d) .

7. Procédé selon l'une quelconque des revendications précédentes, **caractérisé en ce que** la transmission est effectuée sur le chemin de communication bidirectionnel primaire dans des fenêtres de réception limitées dans le temps.

8. Procédé selon l'une quelconque des revendications précédentes 4 à 7, **caractérisé en ce que** le poste intermédiaire détermine la valeur de la grandeur variable dans le temps et sélectionne sur la base de celle-ci une partie de message (par exemple 15a) parmi la pluralité (16) de parties de message (15a à 15d).

9. Procédé selon l'une quelconque des revendications précédentes 4 à 8, **caractérisé en ce que** la grandeur variable dans le temps de la partie de message (par exemple 15a) est acceptée par le poste terminal comme valable si la grandeur variable dans le temps de la partie de message (par exemple 15a) est supérieure à la grandeur variable dans le temps du poste terminal et si la grandeur variable dans le temps de la partie de message (par exemple 15a) est inférieure à la somme de la valeur de la grandeur variable dans le temps du poste terminal et d'une valeur entière supérieure à zéro.

10. Procédé selon l'une quelconque des revendications précédentes, **caractérisé en ce que** la partie de message (15a à 15d) respective contient des paramètres de sécurité, des chiffrements et/ou des codes d'authentification de message (MAC) étant de préférence prévus comme paramètres de sécurité.

11. Procédé selon la revendication 10, **caractérisé en ce que** les paramètres de sécurité ne sont disponibles qu'au poste central et au poste terminal mais pas au poste intermédiaire.

12. Procédé selon l'une quelconque des revendications précédentes, **caractérisé en ce que** la pluralité (16) de parties de message (15a à 15d) à validité limitée dans le temps différente est mise en mémoire tampon par le poste intermédiaire, de préférence sous forme de liste.

13. Procédé selon l'une quelconque des revendications précédentes, **caractérisé en ce que** le poste central envoie la pluralité (16) de parties de message (15a à 15d) à validité limitée dans le temps différente au poste intermédiaire par des chemins de communication tertiaires.

14. Procédé selon l'une quelconque des revendications précédentes, **caractérisé en ce que** le poste intermédiaire envoie la partie de message sélectionnée (par exemple 15a) au poste terminal par des chemins de communication primaires.

15. Procédé selon l'une quelconque des revendications précédentes, **caractérisé en ce que** le résultat de l'exécution des instructions est envoyé en retour au poste central.
